Europäisches Patentamt

European Patent Office

Office européen des brevets

(11) Publication number: 0 346 909 A2

# (12) EUROPEAN PATENT APPLICATION

(21) Application number: 89110905.0

(22) Date of filing: 15.06.89

(51) Int. Cl.⁴: A23K 3/00

(30) Priority: 17.06.88 FI 882924

(43) Date of publication of application:
20.12.89 Bulletin 89/51

(84) Designated Contracting States:
AT BE CH DE ES FR GB GR IT LI LU NL SE

(71) Applicant: CULTOR OY
P.O. Box 105
SF-00241 Helsinki(FI)

(72) Inventor: Aaltonen, Pirkko
Konalantie 2 A 5
SF-00370 Helsinki(FI)
Inventor: Laitinen, Matti
Museotie
SF-01510 Vantaa(FI)

(74) Representative: Neidl-Stippler, Cornelia, Dr.
Neidl-Stippler & Partner Rauchstrasse 2
D-8000 München 80(DE)

(54) Fermentative procedure and additive for preserving fodder.

(57) A fermentative procedure for preserving fodder containing proteins with the aid of lactic acid-producing bacteria in the presence of carbohydrates, in said procedure carbohydrate-splitting enzyme being added to the fodder, and organic physiological acid, and additive for preserving fodder containing proteins with the aid of lactic acid-producing bacteria in the presence of carbohydrates, said additive containing organic physiological acid.

FIG. 1

EP 0 346 909 A2

## FERMENTATIVE PROCEDURE AND ADDITIVE FOR PRESERVING FODDER

The present invention concerns a procedure for preserving fodder containing protein with the aid of bacteria producing lactic acid and in the presence of carbohydrates, wherein enzyme splitting carbohydrates is added to the fodder.

Specifically, the invention concerns a procedure, respectively an additive, for preserving vegetable or animal fodder rich in proteins or fat and proteins.

Nowadays protein fodder, such as fish, fish offal, slaughtering offal, etc., is mainly preserved by acidifying, refrigerating, drying and fermenting.

In acidification usually formic, acetic, lactic, sulphuric and phosphoric acid is used. Acid handling is inconvenient, and even dangerous. The wholesomeness to animals of acid-preserved fodders has been questioned in recent time.

Refrigeration, and deep-freezing in particular, implies high installation and energy costs. Moreover, refrigeration does not prevent spoiling of the fodder e.g. after it has been thawed, when the fodder is used.

Drying likewise involves high energy expenditure. It is also a fact that the value of the fodder in use deteriorates owing to changes taking place in the feed raw material during the drying.

Fermentative preservation methods are based on employing lactic acid bacteria in such a way that they produce lactic acid from carbohydrate either contained in the feed raw material or added thereto. Problems in the form of misfermentation and spoiling of the product have been caused in connection with fermentation by the raw material used, by local conditions and temperatures and by the fermenting arrangements. The instances of misfermentation are due to the lactic acid fermentation not starting properly or to wrong organisms gaining ascendancy and thereby spoiling the raw material.

The object of the present invention is to eliminate the above-mentioned drawbacks occurring in connection with fermentative preserving procedures, and to present a novel fermentative procedure for preserving protein fodder in such a way that fodder preservation will take place more positively than before, with less misfermentation than before and with maximally good results, that is, without spoiling of the fodder.

It is a further object of the invention to provide a novel fermentative procedure for preserving protein fodder in such a way that the fermentation starts and proceeds faster and more efficiently than before.

The particular object of the invention is to provide a novel fermentative procedure for preserving protein fodder in such a way that the total quantity of volatile nitrogen compounds formed in connection with storage will be held reasonably low during prolonged storage, that is, at a level lower than 6 to 7% by weight, this being achieved with the aid of gluconodelta-lactone. It has been found that in conventional processes the total quantity of volatile nitrogen compounds rises to comparatively great height, even close to 20%. When using gluconodeltalactone and carbohydrate-splitting and oxygen-removing enzymes, one has succeeded to keep the quantity of volatile nitrogen compounds on a level of 6 to 7%.

It is a further object of the invention to provide a novel fermentative procedure for preserving protein fodder in such a way that in the process no substantial quantities of biogenamines with harmful effects are produced, such as tryptamine, putrescine, cadaverine, histamine, thyramine, spermidine and spermine. Said harmful biogenamines are produced in some amount when gluconodeltalactone and carbohydrate-splitting and oxygen-removing enzymes are used in connection with lactic acid fermentation and during storage.

In addition, it is an object of the invention to provide an additive which is intended to be added to fodder containing protein in such a way that the fermentation can be implemented more advantageously and positively, as presented in the foregoing, and that specifically the fermentation can be started rapidly and positively so that the possibility of misfermentation is minimized.

Regarding the features which are characteristic of the invention, reference is made to the claims.

In this context "fodder" is understood to mean the protein-containing component, or feed raw material, of the feed or such feed which is intended to be given to animals in admixture with other feeds.

The invention is based on the fundamental idea that to the fodder is added an organic physiological acid, appropriately an acid with 3 to 6 carbon atoms, such as tartaric acid, lactic acid, succinic acid, malic acid, gluconic acid, fumaric acid or another equivalent physiological organic acid. By action of said organic acid and lactic acid production bacteria the pH of the fodder can be brought down rapidly, virtually immediately on adding the acid, far enough, e.g. to between 5 and 3.5, suitably below 4.5, advantageously to about pH 4.2, ao that the chance of misfermentation is minimized and the prerequisites for the desirable lactic acid fermentation improve.

In order to lower the pH value far enough, organic acid is added e.g. 0.3 to 4% by weight, suitably 0.5 to 2% by weight.

2

EP 0 346 909 A2

The organic acid may be added in any form whatsoever, e.g. as free organic acid, as salt, as components of the acid, as a derivative which will produce the desired acid in the fodder, or on the whole in any form whatsoever which will produce the desired effect.

Organic acids and/or their derivatives may be used singly, or they may be used in combination in whatever mixing proportions.

In addition to organic acids, to the fodder are added other substances used in fodder fermentation and known in themselves in the art, such as carbohydrate-splitting enzyme, oxygen-removing enzyme and any other additives promoting fermentation. One may to the feed raw material add amylase and/or glucose oxidase, and in addition e.g. α-amylase, β-amylase, glucoamylase, β-glucanase, cellulase, hemicellulase, pectinase, lactoperoxidase, catalase, lactase, protease, lysozyme, α-galactosidase, phytase, etc. The purpose of the enzymes is to split carbohydrates, i.e., starch, to mono-and disaccharides so that lactic acid bacteria are enabled to use them as their carbon source. Moreover, when desired, one may use an oxygen-removing enzyme to achieve anaerobic fermentation and to speed up the lactic acid fermentation. In order to improve the digestibility of vegetable raw materials, one may furthermore in the procedure of the invention use, and the additive of the invention may contain, other enzymes. e.g. enzymes splitting plant cell tissue, such as cellulases, hemicellulases and pectinases.

It is obvious that lactic acid bacteria are added to the fodder, suitably homofermentative lactic acid bacteria. Any bacteria employed in connection with lactic acid fermentation may be used, e.g. Lactobacillus acidophilus, Lactobacillus bulgaricus, Lactobacillus casei, Lactobacillus helveticus, Lactobacillus lactis, Lactobacillus plantarum, Pediococcus acidilacti, Pediococcus cerevisiae, Pediococcus pentosaceus Streptococcus faecium, and Streotococcus lactis. Particularly advantageous are homofermentative non-proteolytic lactic acid bacteria, that is, those which produce no gas or harmful compounds in connection with fermentation.

The additive of the invention for preserving protein-containing fodder with the aid of lactic acidproducing bacteria in the presence of carbohydrates contains said organic physiological acid and/or a derivative and/or precursor thereof, as defined above, and possibly in addition carbohydrate-splitting enzymes, oxygen-removing enzymes and/or lactic acid bacteria. In the additive of the invention to be added to the fodder, the organic acid(s) and/or its derivative(s) and the other components are advantageously present in dry form, e.g. in crystalline or dried form. The enzymes which may be present in the mix, e.g. absorbed in a carrier, and/or the bacteria will then stay undestroyed by action of the acid.- It should however be noted that the enzymes and bacteria needed in fermentation, in addition to possibly being part of the additive of the invention, may also be added to the process in separate doses.

The procedure and product of the invention are applicable in preserving any protein-containing animal or vegetable feed raw materials whatsoever. such as fish, fish offal, slaughtering offal, meat/bone meal, and other similar feed raw materials.

In connection with the procedure of the invention, the fodder to be preserved is suitable ground, possibly sterilized or pasteurized. If necessary, thereto may be added cereal and additive of the invention, e.g. about 0.2 to 5%, advantageously about 0.5 to 2% of the weight of the fodder. The mixture is conveyed to a silo, where it is allowed to ferment at about 15 to 45° C, advantageously about 20 to 30° C, moisture content about 40 to 85%, advantageously about 50 to 70%, until the pH value of the mix reaches a value about 4.5, advantageously lower than 4.2.

A particularly advantageous acid for adding to the fermentation process is fumaric acid, which ha been found to be harmless e.g. to piglets.

The procedure of the invention also involves no danger to the user. Moreover, the procedure of the invention and the use of the product of the invention are easy and simple and they imply no extra investments over the apparatus used in conventional fermentative preserving methods. Furthermore, the operating costs of the procedure are favourable, compared e.g. with deep freezing and drying. The product obtained by means of the procedure keeps well as it is and will not spoil e.g. in connection with use.

The quantity of lactic acid bacteria in the additive is for instance such that the additive when added to the feed raw material gives rise to an initial bactery count e.g. of about $10^3$ to $10^8$ per g, suitably $10^5$ to $10^6$ per g.At the end of fermentation the lactic acid bactery count is e.g. $10^4$ to $10^{10}$.

The fermentation temperature is lower than 60° C, suitably 15 to 40° C, e.g. 20° C.

The carbohydrate source to be used in the procedure and contained in the respective additive is e.g. barley, oats, wheat, molasses or another similar source of carbohydrates known in the feed industry. The carbohydrate is advantageously gelatinated, for instance processed in an extruder.

The invention is described in the following in detail with the aid of embodiment examples, yet without restricting the invention to the examples presented.

3

Example 1

The purpose of this experiment was to study the influence of an organic crystalline acid, that is fumaric acid, on the fermentation process in preservation of fodder containing proteins with the aid of lactic acid-producing bacteria in the presence of carbohydrates. In the experiment, to 850 g of fresh, ground Baltic herring were added 150 g of extruded wheat flour and for agent lowering the pH of the mix, 5 g fumaric acid (Test 2), 10 g (Test 3), and for reference sample 5 g gluconodeltalactone. To all mixes were further added 20 mg of commercially available α-amylase (Shin Nihon), 100 mg β-amylase preparation Spezyme BBA, Suomen Sokeri Oy, 1500, 220 mg glucoamylase, 10 g conc. glucose oxidase (activity proportion GO/catal. was 3/1), (50 mg and lactic acid bacteria Laktostart 03 Hansen, and 50 mg Pediostart 40 Hansen). In the experiment were determined: pH of the fodder mix, acid number (ml 0.1-N NaOH/10 g), and the quantity of volatile nitrogen compounds as a function of time from commencement of the test. The results are presented in Tables 1, 2 and 3.

Table 1

| pH | | | |
|---|---|---|---|
| Days | Test 1 | Test 2 | Test 3 |
| 0 | 6.20 | 4.95 | 4.56 |
| 1 | 4.45 | 4.75 | 4.60 |
| 2 | 4.36 | 4.46 | 4.46 |
| 3 | 4.30 | 4.43 | 4.43 |
| 7 | 4.22 | 4.27 | 4.26 |
| 12 | 4.22 | 4.27 | 4.25 |
| 20 | 4.17 | 4.20 | 4.20 |

Table 2

| Acid number (ml 0.1-NaOH/10 g) | | | |
|---|---|---|---|
| Days | Test 1 | Test 2 | Test 3 |
| 0 | 3.32 | 10.70 | 15.00 |
| 1 | 22.12 | 13.84 | 17.23 |
| 2 | 27.92 | 22.85 | 22.58 |
| 3 | 31.72 | 27.24 | 25.88 |
| 7 | 36.52 | 34.66 | 34.00 |
| 12 | 38.50 | 36.66 | 36.80 |
| 20 | 41.00 | 39.51 | 39.47 |

Table 3

| Total quantity of volatile nitrogen compounds (%) | | | | |
|---|---|---|---|---|
| Days | | Test 1 | Test 2 | Test 3 |
| 0 | 1.00 | 1.00 | 1.00 | |
| 3 | 3.63 | 2.89 | 2.39 | |
| 7 | 4.66 | 4.03 | 2.99 | |
| 12 | 4.86 | 4.48 | 3.59 | |
| 20 | 5.70 | 5.52 | 4.22 | |

Example 2

The purpose of this experiment was to confirm the results obtained in Example 2 and to determine experimentally practically usable limits for fumaric acid when this acid is used as additive for preserving fodder containing proteins with the aid of lactic acid-producing bacteria. This example was equivalent to Example 1, except that the fumaric acid quantity used was 7 g (in Test 2) and 10 g (in Test 3); furthermore, the additive contained 20 mg α-amylase, 100 mg β-amylase, 20 mg glucoamylase, 10 mg glucose oxidase, 50 mg of the bactery strain Lactobacillus plantarum, and 50 mg of bactery strain Pediococcus pentosaceus. The reference test (Test 1) was made with an equivalent mix containing 5 g gluconodeltalactone instead of fumaric acid.

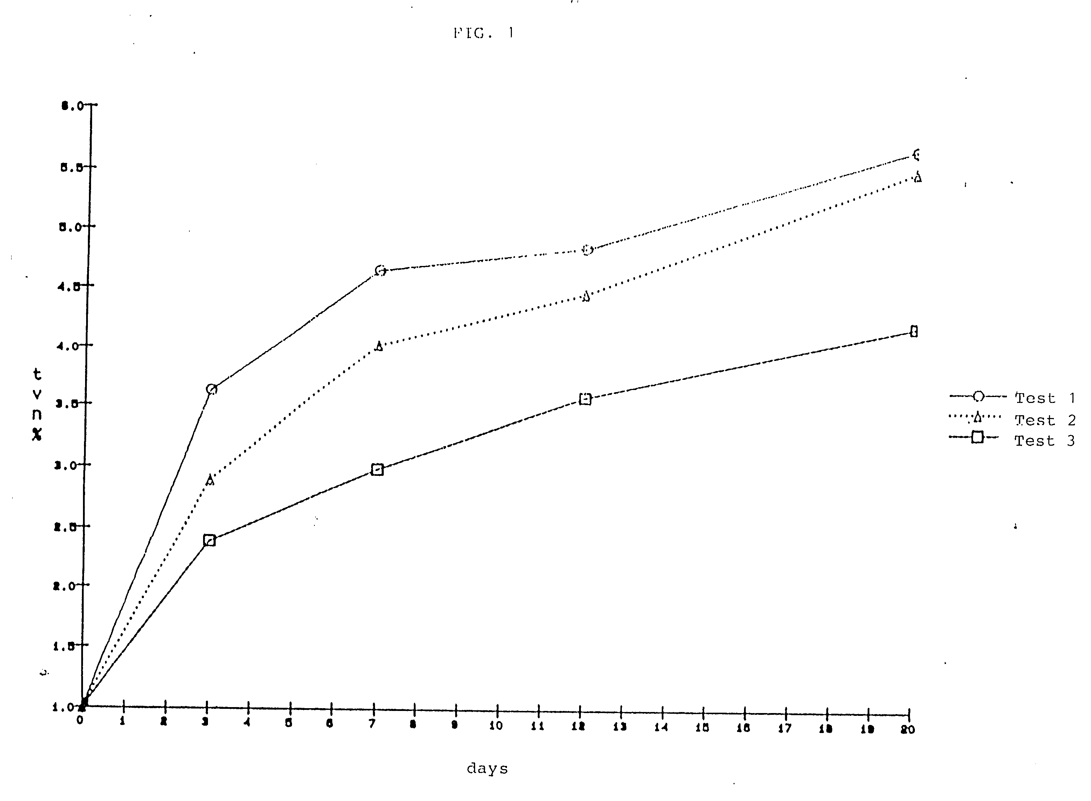

The total quantities of volatile nitrogen compounds were determined in this experiment; the results are graphically shown in Fig. 1.

Example 3

In this experiment, to a mix containing 85% ground Baltic herring and 15% extruder-processed wheat flour were added gluconodeltalactone, tartaric acid, malic acid, citric acid and fumaric acid. pH of the mix prior to acid addition was 6.88. The results of the experiment are presented in Table 4.

Table 4, pH of Baltic herring mix after acid addition

| Acid added | | | pH | 2 hrs | 3 hrs |
|---|---|---|---|---|---|
| GDL | 0.5% | 6.10 | 6.11 | 6.17 | |
| GDL | 1.0% | 5.68 | 5.70 | 5.78 | |
| GDL | 2.0% | 5.10 | 5.12 | 5.25 | |
| Tartaric acid | 0.5% | 5.50 | | | |
| " | " | 1.0% | 4.93 | | |
| " | " | 2.0% | 4.23 | | |
| Malic acid | 0.5% | 5.55 | | | |
| " " | 1.0% | 4.95 | | | |
| " " | 2.0% | 4.48 | | | |
| Citric acid | 0.5% | 5.70 | | | |
| " " | 1.0% | 5.04 | | | |
| " " | 2.0% | 4.45 | | | |
| Fumaric acid | 0.5% | 5.40 | | | |
| " | " | 1.0% | 4.75 | | |
| " | " | 2.0% | 4.10 | | |
| " | " | 4.0% | 3.55 | | |

pH of the Baltic herring mix without acid additions was 6.88.

**Claims**

1. A fermentative procedure for preserving fodder containing proteins with the aid of lactic acid-producing bacteria in the presence of carbohydrates, in said procedure carbohydrate-splitting enzyme being added to the fodder, characterized in that organic physiological acid is added to the fodder.

2. Procedure according to claim 1, characterized in that the organic acid is a physiological acid with 3 to 6 carbon atoms, such as tartaric acid, lactic acid, succinic acid, malic acid, gluconic acid and/or fumaric acid.

3. Procedure according to claim 1 or 2, characterized in that organic acid is added to the fodder so that the pH of the fodder goes down to a value between 5 and 3.5, advantageously to about 4.2

4. Procedure according to any one of claims 1 to 3, characterized in that the organic acid is added in crystalline and/or dried form.

5. Procedure according to any one of claims 1 to 4, characterized in that organic acid is added 0.3 to 4% by weight, advantageously 0.5 to 2% by weight.

6. Procedure according to any one of claims 1 to 5, characterized in that oxygen-removing enzyme is added to the feed raw material.

7. Procedure according to any one of claims 1 to 6, characterized in that to the feed raw material is added α-amylase, β-amylase, glucoamylase, β-glucanase, cellulase, hemicellulase, pectinase, glucose oxidase, lactoperoxidase, lactase, lysozyme, α-galactosidase and/or phytase.

8. Procedure according to any one of claims 1 to 7, characterized in that to the feed raw material are added homofermentative lactic acid bacteria.

9. Additive for preserving fodder containing proteins with the aid of lactic acid-producing bacteria in the presence of carbohydrates, characterized in that the additive contains organic physiological acid.

10. Additive according to claim 9, characterized in that the organic acid contains 3 to 6 carbon atoms.

11. Additive according to claim 9 or 10, characterized in that the additive contains tartaric acid, lactic acid, succinic acid, malic acid, gluconic acid and/or fumaric acid.

12. Additive according to any one of claims 9 to 11, characterized in that the organic acid is crystalline and/or dried.

13. Additive according to any one of claims 9 to 12, characterized in that the additive contains carbohydrate-splitting enzymes.

14. Additive according to any one of claims 0 to 13, characterized in that the additive contains oxygen-removing enzymes.

15. Additive according to any one of claims 9 to 14, characterized in that the additive contains homofermentative lactic acid bacteria.

16. Additive according to any one of claims 9 to 15, characterized in that the constituents of the additive are in dry form.

FIG. 1